# EUROPEAN PATENT SPECIFICATION

(11) **EP 3 140 115 B1**
(45) Date of publication and mention of the grant of the patent: **14.11.2018**
(21) Application number: 15722951.9
(22) Date of filing: 29.04.2015
(51) Int. Cl.: B32B 15/08, B32B 15/085, B32B 15/20, B32B 27/10, B32B 27/32, B32B 3/08, B32B 3/26, B65D 5/70, B65D 5/74, B29L 31/00, B29K 711/12, B29C 45/14

(54) **PACKAGING MATERIAL LAMINATE STRUCTURE**
VERBUNDSTRUKTUR SOWIE DARAUS HERGESTELLTES VERPACKUNGSMATERIAL
STRUCTURE STRATIFIEE POUR MATERIAU D'EMBALLAGE

(30) Priority: 07.05.2014 SE 1450541
(43) Date of publication of application: 15.03.2017
(73) Proprietor: Tetra Laval Holdings & Finance SA, 1009 Pully (CH)
(72) Inventor: BJÖRK, Jonas, S-222 36 Lund (SE); HÅKANSSON, Bengt, S-275 95 Sjöbo (SE)
(74) Representative: Tetra Pak - Patent Attorneys SE
(86) International application number: PCT/EP2015/059281
(87) International publication number: WO 2015/169656

(56) References cited:
- EP-A1- 0 444 862
- DE-A1- 3 832 412
- DE-A1-102008 002 853
- US-A- 4 828 138
- US-A- 5 029 752

## Description

The present invention relates to a packaging material laminate structure and to a container thereof.

### BACKGROUND OF THE INVENTION

Packaging containers of the single use disposable type for liquid foods are often produced from a packaging material based on paperboard or carton. Such container is for example be employed for aseptic packaging of liquid foods such as milk, fruit juices etc, marketed and sold for long term ambient storage. The packaging material in this known packaging container is typically a laminate comprising a bulk layer of paper or paperboard, outer, liquid-tight layers of thermoplastics, a gas barrier layer, most commonly an aluminium foil and finally one or more inside layers composed of one or several part layers, comprising heat-sealable adhesive polymers and/or heat-sealable polyolefins.
Commonly, the packaging container have an opening device in order to facilitate consumer opening, many different types of opening devices including pull-tabs or moulded opening devices, as for example discussed in WO03/095199 and WO/2009/000927.

DE102008002853 discloses an opening and pouring element for packages. The opening and pouring element has a base member and an opening member, which are integrally connected by means of a thin line. Opening is made by means of an opening handle, wherein the thin line between the base element and opening element ruptures.

The packaging containers are generally produced by means of modern, high-speed packaging machines of the type that continuously form, fill and seal packages from a web or from prefabricated blanks of packaging material. Typically many thousands of packages may be prepared per hour.
Despite the efforts and achievements, there's still a need for reliable and cheap openings for such containers.

### SUMMARY OF THE INVENTION

The present invention proposes a package material laminate structure with a subject matter according to independent claim 1 and a packaging container thereof according to independent claim 11.

In the present invention, the packaging material laminate structure comprises a first side, a second side opposite the first side and an attenuated area. The first side refers to the outer or decor layer side, the side being visible to the consumer. The second side refers to the inner side, which is normally in contact with the beverage or liquid. A plastic opening device is arranged with a first portion on the first side and with a second portion on the second side, wherein the first and second portion of the plastic opening device are connected via a first material bridge through the attenuated area. Such bridge as well as the first and second portion can be formed by moulding and particular by injection moulding, wherein the molten material forming the first and second portion penetrates through the attenuated area thereby forming the bridge.
A consumer opening area is defined on the packaging material laminate by one or more weakened areas or lines such that the packaging material laminate is ruptured on using the plastic opening device to open the consumer opening area. Finally, a pouring support device is provided and adjacent to the consumer opening area. The pouring support is having a pouring portion arranged on the first side and a support portion on the second side. The pouring portion and the support portion are connected via a second material bridge through the attenuated area. The pouring portion comprises a pouring lip spaced apart from the first side of the package material laminate.

The present invention provides a cheap and easy opening, while maintaining good pouring particular in package container made from said material and filled with a liquid completely or to a very high level.
In an embodiment, the pouring support is separated from the opening device on the first side. More particular the first portion of the opening device and the pouring portion of the pouring support are separated on the first side. The respective second portions of the opening device and the support portion of pouring support may form a common portion on the second side.
The packaging material laminate structure may comprise a bulk layer, a barrier layer and at least one laminate layer, wherein the attenuated area lacks at least the bulk layer. Packaging material layers suitable for the purpose of the present invention are described in detail in WO2004/089628 or WO03/095199, whose the content related to the packaging material structure is incorporated herein by reference.

In another embodiment, the packaging material laminate comprises one or more weakened areas or lines. Those lines are defining the consumer opening area. Further during opening of the consumer opening area, the package material laminate is ruptured along those weakened lines. In other words the weakened lines facilitate rupturing of the package material laminate along those lines. In a further embodiment, one or more weakened areas or lines are arranged adjacent to the attenuated area as to support rupture of the packaging material laminate to open the consumer opening area.

Another aspect of the invention is related to the inner side of the packaging material laminate structure. In one embodiment the second portion of the opening device on the second, inner side comprises a weakened line at least partly following the one or more weakened areas or lines on the first side. In other words, the material deposited on the second side of the packaging material laminate during the manufacturing process comprises also one or more weakened lines as to facilitate rupturing of the packaging material laminate in a defined way.

In addition, the second portion may comprise a weakened line that is at least partly overlapping the attenuated area. As the attenuated area is ruptured first when opening the consumer opening area, the weakened line on the second portion supports further rupturing in a pre-defined manner. The second portion and the support portion of the pouring support can form an integral common portion on the second side. This may increase robustness when opening the package.

In another aspect, the pouring portion comprises a lateral dimension, which is greater than a lateral dimension of one of the attenuated area and the consumer opening area. The parts of the poring portion exceeding the attenuated area may be slightly connected to the uppermost material layer of the packaging material layer, but otherwise not directly linked to the material bridge. In other words, the material bridge of the pouring support only penetrates through the attenuated area in this embodiment but not through the bulk layer or the whole packaging material laminate structure including the bulk layer.

In an embodiment, a lateral dimension of the second material bridge is smaller than a lateral dimension of one of the first material bridge and/or the pouring portion.

The pouring portion comprises a pouring lip distanced from the first side. Said pouring lip comprises a laterally rounded shape with its outermost lateral edges of the lip having a greater distance to the packaging material than a central part of the lip.
The packaging material laminate can be used to produce containers having an opening and pouring support according to the present invention.

### DESCRIPTION OF THE DRAWING

In the following, the present invention will be explained in greater details using the accompanying drawings, in which
Figure 1 shows a perspective view of a package in accordance with an embodiment of the present invention;
Figure 1A illustrates a front view if a pouring support according to the present invention;
Figure 1B illustrates a side view of the pouring support;
Figure 2 shows an embodiment of a packaging material laminate for a package container according to the present invention;
Figure 3 shows another example of an opening in accordance with the present invention;
Figure 4 shows a further embodiment of an opening of the present invention;
Figure 5 illustrate a bottom view of an embodiment according the present invention.

Similar references refer to the same or similar features.

### DETAILED DESCRIPTION

In the following the term "lateral" or "lateral direction L" refers to a direction perpendicular to a normal pouring direction of the package. The term "longitudinal" or "longitudinal direction D" refers to the normal pouring direction. Consequently, the term "T" refers to the remaining transversal direction. Consequently, the terms "lateral", longitudinal or transversal dimension refer to the dimension of the feature in the respective direction.

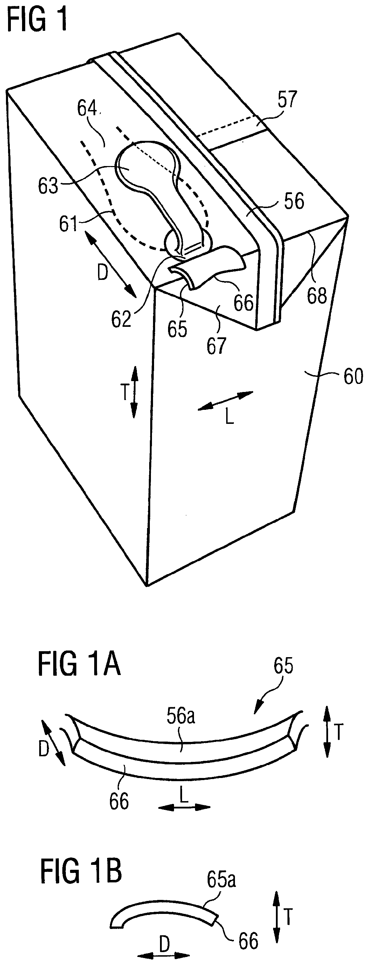

Fig. 1 shows an example of a packaging container 60 in accordance with the present invention and made from material described later. The packaging container is particularly suitable for liquid or semi-liquid food products such as beverages, sauces, soups or the like. Typically, such a package has a volume of about 100 to 2000 ml.

The package container is of brick-type and comprises a top side, on which an opening device 63 is moulded to, transversal and longitudinal seals 56 and 57, respectively. The opening device is on form of a tab and injection moulded through attenuation 62. The term "injection moulded" means that during the manufacturing process, plastic material is injected through the attenuation as to from the tab 63 and a corresponding part, (not shown) on the inside of the package. During the injection moulding process, the plastics penetrate the attenuation 62 forming a material bridge through the attenuation 62. When opening the container by pulling the tap, the bridge and inside portion provide rigidity and stability to overcome the force necessary to rupture the perforation line 61.

Attenuation 62 is a pre-laminated hole, meaning the cardboard of container 60 is removed in this area and only one or more plastic layers and/or aluminium foils layers are provided.

Starting from the attenuation 62, two weakened lines 61 are provided and extend from attenuation 62 substantially in the same direction as tab 63 is arranged. The weakened lines 61, made of a perforation define a consumer area 64. When opening the packaging container 60, this area is ruptured by pulling the tab 63, creating an opening for pouring the liquid.

The packaging container also comprises a pouring support 65 in form of a rounded lid protruding the flap 67 attached to the side of the package container. The pouring support's 65 lateral dimension (dimension in lateral direction L) exceeds the dimension of the attenuation or hole 62. A middle portion of support 65 is however arranged over attenuation 62 and also injection moulded. Due to the injection moulding, a portion of pouring support penetrates through the attenuation 62, forming a bridge and connects to a corresponding part on the inside of the package. That inside portion is also connected to the inside portion connected to tab 63 forming a common inside portion (not shown). The lateral dimension of pouring support 65 can be similar to the maximal lateral dimension of the consumer area 64 to facilitate proper pouring. Area 69 of the pouring support exceeding the attenuation 62 is only slightly connected with the uppermost layer of packaging material laminate 60. They are not directly extending into the material laminate forming a bridge like in the attenuation 62. Pouring support 65 has a rounded shape in longitudinal direction, spacing it apart from the package container surface. The outermost edge 66 is arranged substantially parallel the package edge 68, but it is slightly rounded from the front view.
Figure 1A illustrates a front view of the pouring support 65. Front edge 66 is shaped in form of a circle segment, similar to a "smile". Parts of the upper surface 65a can be seen due to specific shape which resembles the form of a lip. The "smile" shape of the lip results that the central part of the lip has a smaller distance from the packaging material than the outermost edges. This enables the liquid to flow along the central part when pouring resulting in less spoilage. Figure 1B illustrates a side view of the pouring support 65. References "L,", "D", "T" indicate the respective directions.

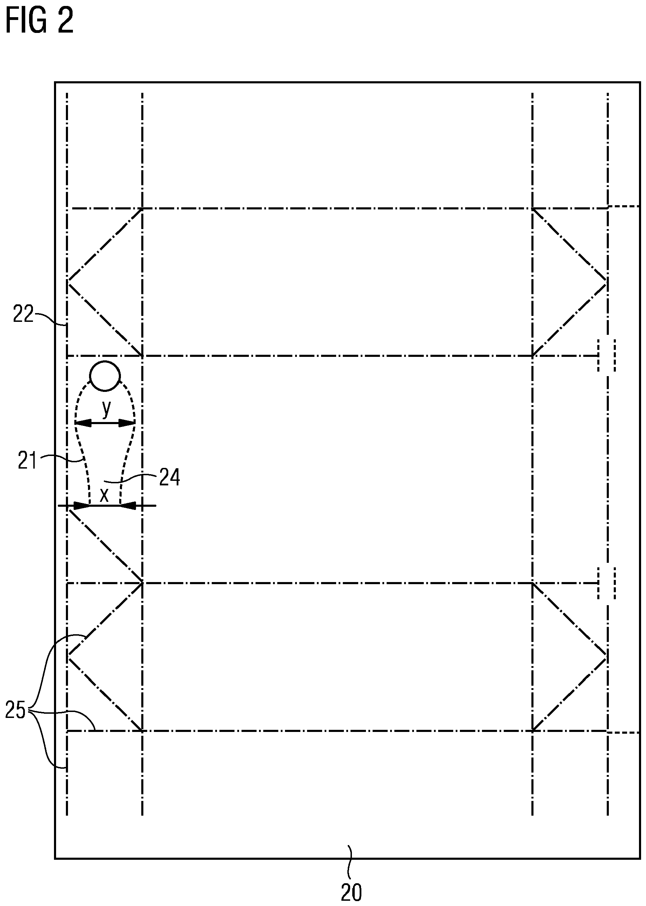

Figure 2 is a schematic view on the first side of a part of a web of packaging material 20. For illustration purposes, Figure 2 contains packaging material layout for a single packaging container. The packaging material can either be formed of individual blanks (like illustrated in the embodiment of Figure 2, where exactly one container layout is shown), or in form of a continuous web, where a multiple of webs area arranged on each other.

Each layout or blank is having a weakened line or area 21, which in the embodiment illustrated, is in direct contact with an attenuation or hole 22. Hole 22 in this step is already pre-laminated, meaning that some or more layers of aluminium foil and/or plastic layers like LDPE or PP are laminated on the cardboard layer, effectively closing holes 22. Those layers act as oxygen and light barrier in the final stage of the container.

The weakened line 21 at least partly defines a consumer opening area 24, which for example may be bigger or smaller than the area defined by the weakened lines or area 21. In the embodiment the weakened line is made of a perforation and comprises a slight s-shape with its bulge adjacent to the hole 22. The maximal dimension y (lateral) of such bulge is higher than the dimension x in the distant area of the area framed by the two weakened lines 21

The web of packaging material of Figure 2 also comprises several crease lines 25 which are intended to assist in forming and folding of the packaging container. During the manufacturing process of the package container, the web will be folded along those crease lines to provide an appealing appearance. The area, on which the hole 22 is arranged, will be placed on top of the resulting packaging container.

Each type of packaging container has its specific crease pattern to form different shapes of packaging containers.

The packaging material according to the embodiment of Figure 2 comprises on top a decor layer of a polyolefin such as a suitable LDPE or PP attached to a paper or paperboard layer. The decor layer can be used for example to provide a cover a printed pattern, the hole 22 and the weakened lines 21 on a paper or paperboard layer. The paperboard layer, on the side opposite the decor layer, has a laminate layer selected from suitable polyolefins such as LDPE or PP. The laminate layer provides adhesion to an oxygen barrier layer, which is also arranged on side of the paper or paperboard layer opposite the decor layer. The barrier layer provides the desired barrier such as oxygen, light, water and vapour barrier depending on the specific need determined by the product to be packed. The barrier layer can for example be an aluminium foil or a vapour deposited film, such as a metalized or vapour deposition coated, such as PECVD coated film. On the side opposite the laminate layer the adhesive polymer is arranged on the barrier layer. The adhesive may for example be applied by extrusion coating, when the barrier layer is aluminium foil the adhesive could be a suitable adhesive marketed under the trade name Nucrel®. On the side opposite the barrier layer, the adhesive is provided with a heat-sealable layer such as a suitable polyolefin such as PE or PP or blends thereof. The heat-sealable layer is the layer facing the product in the finished packed packaging container. The heat-sealable material can be arranged by extrusion coating, or by a pre-made film through film lamination.

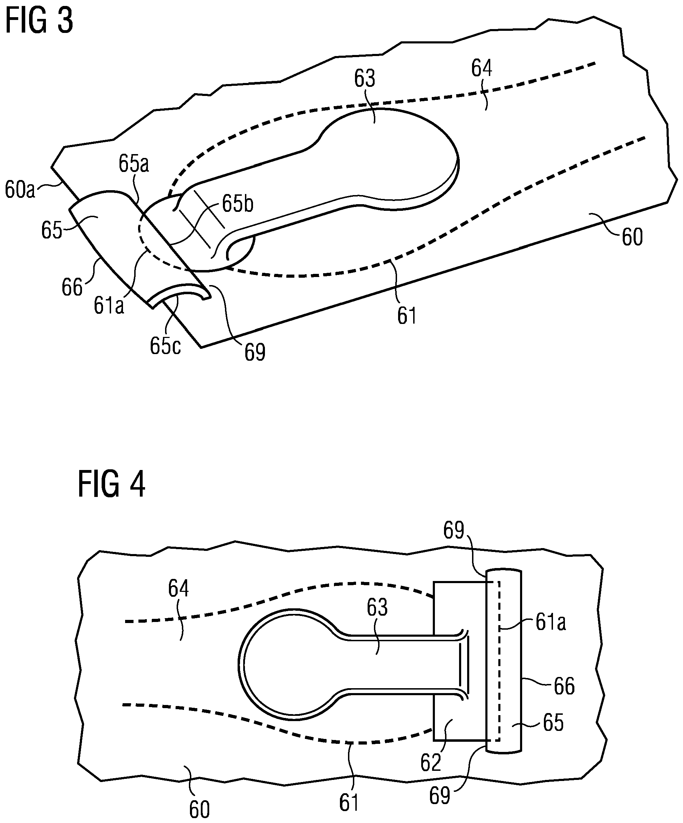

Figure 3 is a schematic illustration of an outer part of a packaging container made of a packaging material 60, for example as described in Figure 1 or Figure 2. The embodiment comprises a handle 63 for opening a consumer area 64 by pulling the handle to rupture the perforation line 61. Handle 63 comprises a plastic tab by moulding, e.g. injection moulding. For this purpose plastic is injected through circle shaped attenuation 62 to form on the upper side the visible tab and on the lower side a support section covering the attenuated area and parts of the adjacent packaging material structure. Support section and tab is connected via a plastic material bridge. The embodiment also comprises a pouring support lid 65 which has a slightly rounded shape 65c. Outermost end portion 66 of the pouring support is slightly rounded and protrudes the edge 60a of the packaging material laminate and package container. The pouring support is also moulded, e.g. injection moulded onto the surface of the attenuated area 62. More particular, the pouring support is rigidly connected to a material bridge, produced by injection moulding, through the attenuated area 62 to a support portion on the lower surface of the packaging material (not shown). The support portion of both, the tap 63 and the pouring support 65 form a common support on the lower side of the packaging material laminate in the attenuated area and adjacent areas of packaging material laminate 60. Thereby a strong support is achieved if a consumer rips the consumer area open.

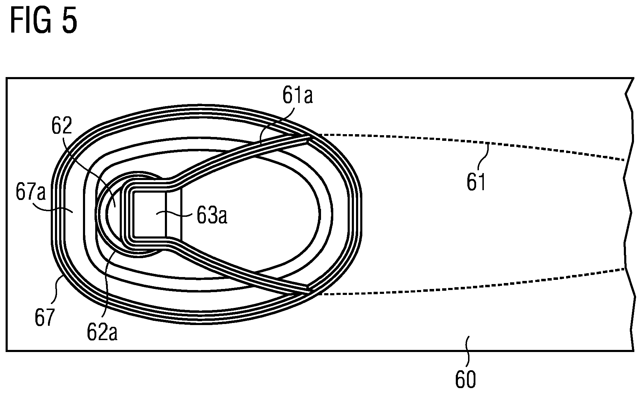

Figure 5 shows a view of the packaging material laminate from the lower side illustrating the support portions. The support portion 67 is a common support portion made of plastic and rigidly attached to the packaging material laminate 60 on the lower side. A first support portion 67a is connected via a material bridge (not shown) to the pouring support on the upper side. A second support portion 63a in the area of the attenuated area 62a is connected to the tab 63. Weakened lines 61a in the plastic support portion follow the perforation or weakened lines 61 in the package material laminate. Lines 61a shall support or facilitate a rupture of the consumer area along the pre-defined weakened lines 61.

Fig 4 is a schematic illustration of an outer part of a packaging container made of a packaging material 60, for example as described in Fig 1, and the illustration includes a handle for consumer opening, i.e. a tab section 63 which is a plastic tab made by moulding, e.g. injection moulding. The illustration additionally includes attenuation or hole 62, two weakened lines 61 extending from attenuation 62 thereby defining a consumer opening area 64. Compared to the embodiments illustrated by Figure 3 the illustration in Figure 4 illustrates another design of the attenuation or hole 62. The length of pouring support 65 exceeds the lateral dimension of attenuation 62 and consumer opening area 64. Pouring support is attached to the attenuated area by injection moulding. The portion arranged over the packaging material laminate is however not rigidly connected, i.e. there's no material bridge through the material laminate. The pouring support may only be connected with the uppermost laminate layer of packaging material layer in those areas 69.

### REFERENCE LIST

- 56: seal
- 57: seal
- 60: packaging material laminate, package
- 61: weakened lines, perforation
- 61a: attenuation edge
- 62: attenuation, hole
- 63: tab
- 64: consumer area
- 65: pouring support
- 65a: top side
- 66: outer edge of pouring support
- 67: support portion
- 69: protruding areas

## Claims

1. A packaging material laminate structure (60) comprising:
- a first side, a second side opposite the first side and a attenuated area (62);
- a plastic opening device (63) arranged with a first portion (63) on the first side and with a second portion (63a) on the second side, wherein the first and second portion (63, 63a) of the plastic opening device are connected via a first material bridge through the attenuated area (62);
- a consumer opening area (64) on the packaging material laminate structure (60), that packaging material laminate is ruptured in a defined manner on using the plastic opening device (63) to open the consumer opening area (64);
- a pouring support (65) device adjacent to the consumer opening area (64) having a pouring portion arranged on the first side and a support portion (67a) on the second side, wherein the pouring portion and the support portion (67a) are connected via a second material bridge through the attenuated area (62), wherein the pouring portion comprises a pouring lip (65a) spaced apart from the first side of the package material laminate.

2. The packaging material according to claim 1, wherein the second portion (63a) of the plastic opening device and the support portion (67a) of the pouring support form an integral portion (67) on the second side.

3. The packaging material laminate according to any of the preceding claims, comprising a bulk layer, a barrier layer and at least one laminate layer, wherein the attenuated area lacks at least the bulk layer.

4. The packaging material laminate according to any of the preceding claims, further comprising one or more weakened areas or lines (61), said areas or lines (61) defining the consumer opening area (64), such that the package material laminate is ruptured at least partly along these areas or lines (61) during opening.

5. The packaging material of claim 4, wherein the one or more weakened areas or lines (61) are arranged adjacent to the attenuated area (62) as to support rupture of the packaging material laminate to open the consumer opening area (64).

6. The packaging material of any one of claim 4 to 5, wherein the second portion (63a) on the second side comprises a weakened line at least partly following the one or more weakened areas or lines (61) on the first side.

7. The packaging material according to any of the preceding claims, wherein the second portion (63a) comprises a weakened line that is at least partly overlapping the attenuated area (62).

8. The packaging material according to any of the preceding claims, wherein the pouring portion (65) comprises a lateral dimension which is greater than a lateral dimension of one of the attenuated area (62) and the consumer opening area (64).

9. The packaging material according to claim 1, wherein said pouring lip comprises a laterally rounded shape with its outermost edges of the lip having a greater distance to the packaging material laminate than a central part of the lip.

10. The packaging material according to any of the preceding claims, wherein a lateral dimension of the second material bridge is smaller than a lateral dimension of one of the first material bridge and pouring portion.

11. Container for a liquid comprising the packaging material of any of the preceding claims.

12. Container of claim 11, wherein the outermost edge of the pouring support protrudes a ridge (68) of the container.

## Patentansprüche

1. Struktur aus Verpackungsmateriallaminat (60), umfassend:
- eine erste Seite, eine zweite Seite gegenüber der ersten Seite und einen abgedünnten Bereich (62);
- eine Kunststofföffnungsvorrichtung (63), die mit einem ersten Abschnitt (63) auf der ersten Seite und einem zweiten Abschnitt (63a) auf der zweiten Seite angeordnet ist, wobei der erste und zweite Abschnitt (63, 63a) der Kunststofföffnungsvorrichtung über eine erste Materialbrücke durch den abgedünnten Bereich (62) verbunden sind;
- einen Verbraucheröffnungsbereich (64) auf der Struktur aus Verpackungsmateriallaminat (60), wobei das Verpackungsmateriallaminat auf definierte Weise gebrochen wird, wenn die Kunststofföffnungsvorrichtung (63) zum Öffnen des Verbraucheröffnungsbereichs (64) verwendet wird;
- eine Ausgießstützvorrichtung (65) angrenzend an den Verbraucheröffnungsbereich (64) mit einem auf der ersten Seite angeordneten Ausgießabschnitt und einem Stützabschnitt (67a) auf der zweiten Seite, wobei der Ausgießabschnitt und der Stützabschnitt (67a) über eine zweite Materialbrücke durch den abgedünnten Bereich (62) verbunden sind, wobei der Ausgießabschnitt eine Ausgießlippe (65a) umfasst, die einen Abstand zur ersten Seite des Verpackungsmateriallaminats aufweist.

2. Verpackungsmaterial nach Anspruch 1, wobei der zweite Abschnitt (63a) der Kunststofföffnungsvorrichtung und der Stützabschnitt (67a) der Ausgießstützvorrichtung auf der zweiten Seite einen Abschnitt aus einem Stück (67) bilden.

3. Verpackungsmateriallaminat nach einem der vorhergehenden Ansprüche, umfassend eine Schüttschicht, eine Barriereschicht und mindestens eine Laminatschicht, wobei dem abgedünnten Bereich mindestens die Schüttschicht fehlt.

4. Verpackungsmateriallaminat nach einem der vorhergehenden Ansprüche, ferner umfassend einen oder mehrere abgedünnte Bereiche oder Linien (61), wobei die Bereiche oder Linien (61) den Verbraucheröffnungsbereich (64) definieren, so dass das Verpackungsmateriallaminat während des Öffnens zumindest teilweise entlang dieser Bereiche oder Linien (61) gebrochen wird.

5. Verpackungsmaterial nach Anspruch 4, wobei der/die eine oder mehreren abgedünnten Bereiche oder Linien (61) benachbart zum abgedünnten Bereich (62) angeordnet sind, um das Aufbrechen des Verpackungsmateriallaminats zu unterstützen, um den Verbraucheröffnungsbereich (64) zu öffnen.

6. Verpackungsmaterial nach einem der Ansprüche 4 bis 5, wobei der zweite Abschnitt (63a) auf der zweiten Seite eine abgedünnte Linie umfasst, die zumindest teilweise dem/der einen oder deb mehreren abgedünnten Bereichen oder Linien (61) auf der ersten Seite folgt.

7. Verpackungsmaterial nach einem der vorhergehenden Ansprüche, wobei der zweite Abschnitt (63a) eine abgedünnte Linie umfasst, die zumindest teilweise mit dem abgedünnten Bereich (62) überlappt.

8. Verpackungsmaterial nach einem der vorhergehenden Ansprüche, wobei der Ausgießabschnitt (65) ein Seitenmaß umfasst, das größer ist als ein Seitenmaß eines der abgedünnten Bereiche (62) und des Verbraucheröffnungsbereichs (64).

9. Verpackungsmaterial nach Anspruch 1, wobei die Ausgießlippe eine seitlich abgerundete Form umfasst, bei der die äußersten Kanten der Lippe einen größeren Abstand zum Verpackungsmateriallaminat aufweisen als ein zentraler Teil der Lippe.

10. Verpackungsmaterial nach einem der vorhergehenden Ansprüche, wobei ein Seitenmaß der zweiten Materialbrücke kleiner ist als ein Seitenmaß der ersten Materialbrücke oder des Ausgießabschnitts.

11. Behälter für eine Flüssigkeit, umfassend das Verpackungsmaterial nach einem der vorhergehenden Ansprüche.

12. Behälter nach Anspruch 11, wobei der äußerste Rand der Ausgießstützvorrichtung eine Kante (68) des Behälters überragt.

## Revendications

1. Structure de stratifié (60) de matériau d'emballage comprenant :
- un premier côté, un second côté opposé au premier côté et une zone amincie (62) ;
- un dispositif d'ouverture (63) en plastique agencé avec une première partie (63) sur le premier côté et avec une seconde partie (63a) sur le second côté,
dans laquelle les première et seconde parties (63, 63a) du dispositif d'ouverture en plastique sont raccordées par l'intermédiaire d'un premier pont de matériau à travers la zone amincie (62) ;
- une zone d'ouverture (64) par le consommateur sur la structure de stratifié (60) de matériau d'emballage, dans laquelle ce stratifié de matériau d'emballage est rompu d'une manière définie lors de l'utilisation du dispositif d'ouverture (63) en plastique pour ouvrir la zone d'ouverture (64) par le consommateur ;
- un dispositif de support verseur (65) adjacent à la zone d'ouverture (64) par le consommateur comportant une partie verseuse disposée sur le premier côté et une partie de support (67a) sur le second côté,
dans laquelle la partie verseuse et la partie de support (67a) sont raccordées par l'intermédiaire d'un second pont de matériau à travers la zone amincie (62), dans laquelle la partie verseuse comprend une lèvre verseuse (65a) séparée du premier côté du stratifié de matériau d'emballage.

2. Matériau d'emballage selon la revendication 1, dans lequel la seconde partie (63a) du dispositif d'ouverture en plastique et la partie de support (67a) du support verseur constituent une partie (67) d'un seul tenant sur le second côté.

3. Stratifié de matériau d'emballage selon l'une quelconque des revendications précédentes, comprenant une couche principale, une couche barrière et au moins une couche de stratifié, dans lequel la zone amincie est dépourvue d'au moins la couche principale.

4. Stratifié de matériau d'emballage selon l'une quelconque des revendications précédentes, comprenant en outre une ou plusieurs zones ou lignes (61) affaiblies, lesdites zones ou lignes (61) délimitant la zone d'ouverture (64) par le consommateur, de telle sorte que pendant l'ouverture le stratifié de matériau d'emballage est rompu au moins partiellement le long de ces zones ou lignes (61).

5. Matériau d'emballage selon la revendication 4, dans lequel la ou les zones ou lignes (61) affaiblies sont disposées adjacentes à la zone amincie (62) afin de soutenir la rupture du stratifié de matériau d'emballage pour ouvrir la zone (64) d'ouverture par le consommateur.

6. Matériau d'emballage selon la revendication 4 ou 5, dans lequel la seconde partie (63a) sur le second côté comprend une ligne affaiblie faisant au moins partiellement suite à la ou les zones ou lignes (61) affaiblies sur le premier côté.

7. Matériau d'emballage selon l'une quelconque des revendications précédentes, dans lequel la seconde partie (63a) comprend une ligne affaiblie qui chevauche au moins partiellement la zone amincie (62).

8. Matériau d'emballage selon l'une quelconque des revendications précédentes, dans lequel la partie verseuse (65) présente une dimension latérale qui est supérieure à la dimension latérale soit de la zone amincie (62) soit de la zone (64) d'ouverture par le consommateur.

9. Matériau d'emballage selon la revendication 1, dans lequel ladite lèvre verseuse présente une forme arrondie latéralement, les bords les plus extérieurs de la lèvre ayant une plus grande distance par rapport au stratifié de matériau d'emballage qu'une partie centrale de la lèvre.

10. Matériau d'emballage selon l'une quelconque des revendications précédentes, dans lequel la dimension latérale du second pont de matériau est inférieure à la dimension latérale soit du premier pont de matériau soit de la partie verseuse.

11. Récipient pour liquide comprenant le matériau d'emballage selon l'une quelconque des revendications précédentes.

12. Récipient selon la revendication 11, dans lequel le bord le plus extérieur du support verseur pousse en avant une crête (68) du récipient.
